# EUROPÄISCHE PATENTSCHRIFT

(11) **EP 2 414 240 B1**
(45) Veröffentlichungstag und Bekanntmachung des Hinweises auf die Patenterteilung: **28.08.2013**
(21) Anmeldenummer: 10709399.9
(22) Anmeldetag: 04.03.2010
(51) Int. Cl.: B64F 1/36, B65G 43/00, B65G 47/00, G01N 23/04, G01N 23/06, G01V 5/00

(54) **TRANSPORTWANNENIDENTIFIKATION**
TRANSPORT BIN IDENTIFICATION
IDENTIFICATION DE CUVES DE TRANSPORT

(30) Priorität: 02.04.2009 DE 102009015606
(43) Veröffentlichungstag der Anmeldung: 08.02.2012
(73) Patentinhaber: Smiths Heimann GmbH, 65205 Wiesbaden (DE)
(72) Erfinder: AUST, Stefan, 65510 Idstein (DE); JENTSCH, Harald, 65510 Idstein (DE)
(74) Vertreter: Greif, Thomas
(86) Internationale Anmeldenummer: PCT/EP2010/001341
(87) Internationale Veröffentlichungsnummer: WO 2010/112117

(56) Entgegenhaltungen:
- GB-A- 2 362 710
- US-A1- 2007 132 580

## Beschreibung

Die vorliegende Erfindung betrifft Verfahren zur Sicherheitsüber-prüfung von Handgepäck.

Röntgenprüfsysteme werden beispielsweise dazu eingesetzt, um das Handgepäck von Flugpassagieren auf illegale oder gefährliche Inhalte zu überprüfen. Dazu wird an einem Erstkontrollplatz mit einem Röntgengerät ein Röntgenbild des zu untersuchenden Gepäckstücks angefertigt. Gepäckstücke, die anhand des Röntgenbildes nicht eindeutig als unverdächtig klassifiziert werden können, werden von einem anderen Bediener geöffnet und nachkontrolliert. Dazu hat der Bediener am Nachkontrollplatz einen Bildschirm, auf dem das vorher erzeugte Röntgenbild angezeigt wird. Da der Erstkontrollplatz mit dem Röntgengerät und der Nachkontrollplatz im Regelfall räumlich getrennt sind, ergibt sich das Problem, am Nachkontrollplatz das dem zu kontrollierenden Gepäckstück zugehörige Röntgenbild schnell und zuverlässig zu identifizieren und anzuzeigen.

Gelöst wird diese Aufgabe erfindungsgemäß durch ein Verfahren nach Patentanspruch 1. Vorteilhafte Ausgestaltungsformen der Erfindung sind in den abhängigen Patentansprüchen angegeben.

Eine Transportwanne weist fest mit der Wanne verbundene Kennzeichnungsmittel auf. Das Kennzeichnungsmittel enthält eine eindeutige Kennung der Transportwanne. Bei dem Kennzeichnungsmittel handelt es sich beispielsweise um einen RFID-Sender, einen Barcode oder um Bleisymbole. Ein zu untersuchendes Objekt wird in die Transportwanne gelegt, sodass die Kennung der Transportwanne während des Kontrollprozesses auch das Gepäckstück eindeutig identifiziert.

Ein Röntgenprüfsystem besteht unter anderem aus einem Erstkontrollplatz, einem Nachkontrollplatz und mindestens einer Transportwanne. Jede Transportwanne verfügt über eine eindeutige Kennung. Der Erstkontrollplatz weist ein Röntgengerät zur Erzeugung eines Röntgenbildes, Mittel zum Auslesen des Kennzeichnungsmittels der Transportwanne und Mittel zur Zuordnung des Röntgenbildes zu der Transportwanne auf. Die Zuordnung des Röntgenbildes zu der Transportwanne erfolgt über die Kennung der Transportwanne. Die Kennung der Transportwanne wird ermittelt, indem das Kennzeichnungsmittel ausgelesen wird.

Das Röntgengerät besteht aus einer Röntgeneinrichtung mit mindestens einer Röntgenquelle und mindestens einem Röntgendetektor in einem röntgendichten Gehäuse sowie einer Bedien- und Anzeigeeinrichtung. Aus dem Ausgangssignal des Röntgendetektors wird ein Röntgenbild des Gepäckstücks berechnet und auf der Anzeigeeinrichtung dargestellt.

Bei dem Mittel zum Auslesen des Kennzeichnungsmittels der Transportwanne handelt es sich zum Beispiel um einen RFID-Empfänger oder einen Barcodeleser. Diese Mittel sind vorteilhaft in der Nähe der Röntgeneinrichtung angeordnet. Alternativ oder zusätzlich handelt es sich bei dem Mittel zum Auslesen des Kennzeichnungsmittels der Transportwanne um eine Bildbearbeitungsroutine, die die Kennung aus dem Röntgenbild extrahiert.

Der Nachkontrollplatz weist Mittel zum Auslesen des Kennzeichnungsmittels der Transportwanne und eine Einrichtung zur Anzeige des der Transportwanne zugeordneten Röntgenbildes auf. Die Anzeigeeinrichtung ist bevorzugt mit dem Röntgengerät des Erstkontrollplatzes verbunden, um das darzustellende Röntgenbild von dort abzurufen.

Bei dem Mittel zum Auslesen des Kennzeichnungsmittels handelt es sich beispielsweise um einen RFID-Empfänger oder einen Barcodeleser. Alternativ oder zusätzlich handelt es sich bei dem Mittel zum Auslesen des Kennzeichnungsmittels um eine optische Erfassungseinrichtung wie eine Kamera. Die Erfassungseinrichtung erkennt entweder direkt die Bleisymbole oder einen Schriftzug, der die gleiche Kennung enthält wie die Bleisymbole.

Bei der Sicherheitsüberprüfung eines Objektes wird das Objekt zunächst in einer Transportwanne abgelegt. Anschließend wird ein Röntgenbild des Objektes aufgenommen und ausgewertet, beispielsweise durch eine Bedienperson. Weiterhin wird die Kennung der Transportwanne ausgelesen und automatisch dem zugehörigen Röntgenbild zugeordnet. Dann wird die Transportwanne zu einem Nachkontrollplatz transportiert, die Kennung der Transportwanne ermittelt und das der Kennung der Transportwanne zugeordnete Röntgenbild angezeigt.

US 2007/132580 offenbart eine Wanne, in der Gegenstände beispielsweise durch einen Röntgenscanner befördert werden können und die mit einer Identifizierungsnummer versehen ist. Letztere kann einen Strichcode, einen RFID-Sender oder eine strahlenundurchlässige Nummer enthalten.

Die Identifizierungsnummer kann dazu verwendet werden, Wannen, deren Inhalt sich bei einem ersten Scannen als möglicherweise gefährlich herausgestellt hat, zu identifizieren und einer genaueren Kontrolle zu unterziehen.

Die vorliegende Erfindung soll anhand dreier Ausführungsbeispiele näher erläutert werden. Dabei zeigt:
- Figur 1: ein Röntgenprüfsystem,
- Figur 2: eine Transportwanne mit RFID-Sender,
- Figur 3: eine Transportwanne mit Barcode,
- Figur 4: eine Transportwanne mit Bleisymbolen und
- Figur 5: ein Röntgenbild bei Verwendung einer Transportwanne mit Bleisymbolen.

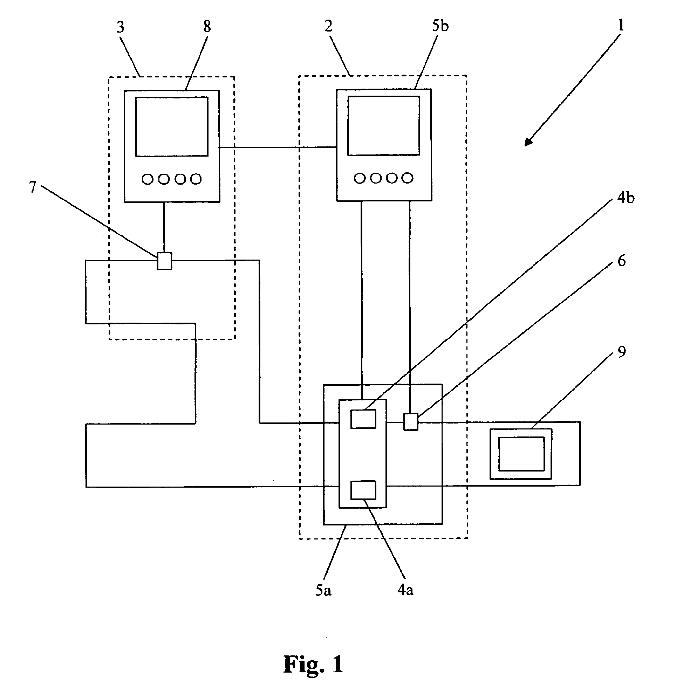

Figur 1 zeigt schematisch ein Röntgenprüfsystem 1 mit einem Erstkontrollplatz 2 und einem Nachkontrollplatz 3. Der Erstkontrollplatz 2 umfasst ein Röntgengerät 5 mit einer Röntgeneinrichtung 5a und einer Bedien- und Anzeigeeinrichtung 5b, einem Mittel 6 zum Auslesen eines Kennzeichnungsmittels einer Transportwanne 9 und einem Mittel zur Zuordnung eines Röntgenbildes zu der Transportwanne 9. Die Röntgeneinrichtung 5a enthält eine Röntgenquelle 4a und einen Röntgendetektor 4b in einem röntgendichten Gehäuse. Der Nachkontrollplatz 3 umfasst eine Bedien- und Anzeigevorrichtung 8 sowie Mittel 7 zum Auslesen des Kennzeichnungsmittels der Transportwanne 9.

Ein zu untersuchendes Objekt wird in die Transportwanne 9 gelegt und mit dieser zusammen durch die Röntgeneinrichtung 5a transportiert. Das Objekt und die Transportwanne 9 werden mit Röntgenstrahlung aus der Röntgenquelle 4a beaufschlagt. Der Röntgendetektor 4b leitet die Intensität der transmittierten Röntgenstrahlung an die Bedien- und Auswerteeinrichtung 5b weiter, die daraus ein Röntgenbild berechnet und anzeigt. Außerdem wird durch die Mittel 6 die Kennung der Transportwanne 9 ermittelt und das Röntgenbild der Kennung zugeordnet.

Kann das Objekt durch die Bedienperson des Erstkontrollplatzes 2 nicht als unverdächtig klassifiziert werden, wird die Transportwanne 9 mit dem Objekt dem Nachkontrollplatz 3 zugeführt. Dort wird die Kennung der Transportwanne 9 ermittelt und das der Kennung, und damit dem Objekt, zugeordnete Röntgenbild auf der Bedien- und Anzeigeeinrichtung 8 angezeigt.

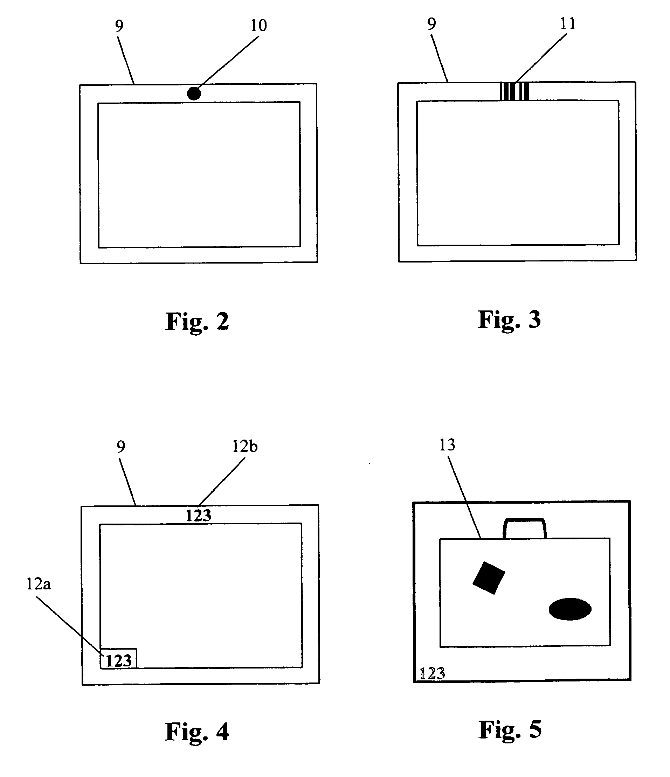

In einem ersten Beispiel nach Figur 2 handelt es sich bei dem fest mit der Transportwanne 9 verbundenen Kennzeichnungsmittel um einen RFID-Sender 10. Der RFID-Sender 10 strahlt dauerhaft oder auf Anfrage die Kennung der Transportwanne 9 ab. In diesem Beispiel sind die Mittel 6 und 7 zum Auslesen des Kennzeichnungsmittels als RFID-Empfänger ausgebildet.

In einem zweiten Beispiel nach Figur 3 handelt es sich bei dem fest mit der Wanne verbundenen Kennzeichnungsmittel um einen Barcode 11. In diesem Beispiel sind die Mittel 6 und 7 zum Auslesen des Kennzeichnungsmittels als Barcode-Leser ausgebildet.

In einem dritten Beispiel nach Figur 4 handelt es sich bei dem fest mit der Wanne verbundenen Kennzeichnungsmittel 12 um Bleisymbole 12a und einen Schriftzug 12b. Die Bleisymbole 12a sind beispielsweise in das Material der Transportwanne 9 eingelassen. Die von der Röntgenquelle 4a ausgestrahlte Röntgenstrahlung wird von den Bleisymbolen 12a abgeschwächt, wodurch die Bleisymbole 12a im Röntgenbild erkennbar sind. Das Mittel 6 zum Auslesen des Kennzeichnungsmittels der Transportwanne 9 ist im vorliegenden Beispiel abweichend von der Darstellung in Figur 1 eine Komponente der das Röntgenbild erzeugenden Einrichtung des Erstkontrollplatzes 2.

Ein beispielhaftes Röntgenbild ist in Figur 4 dargestellt. Neben der Kontur des zu untersuchenden Objekts 13 ist im Röntgenbild auch die Kontur der Bleisymbole 12a erkennbar. Diese Kontur korrespondiert zu der Kennung der Transportwanne 9, der das Röntgenbild zugeordnet wird. Eine Bildverarbeitungssoftware erkennt die Kontur der Bleisymbole 12a und extrahiert daraus die Kennung der Transportwanne 9.

Die Kennung ist darüber hinaus optisch wahrnehmbar auf der Transportwanne 9 angebracht, beispielsweise als Schriftzug 12b. Der Schriftzug 12b wird von dem als Videokamera ausgebildeten Mittel 7 zum Auslesen des Kennzeichnungsmittels erfasst und erkannt. Alternativ gibt die Bedienperson des Nachkontrollplatzes 3 die Kennung manuell in die Bedien- und Anzeigevorrichtung 8 ein.

## Patentansprüche

1. Verfahren zur Sicherheitsüberprüfung von Handgepäck als Objekt, aufweisend die Verfahrensschritte:
- Ablegen des Objekts in einer Transportwanne (9), die ein fest mit der Wanne (9) verbundenes Kennzeichnungsmittel (10, 11, 12) mit einer wannenspezifischen Kennung aufweist,
- Aufnehmen eines Röntgenbildes des Objekts,
- Auswerten des Röntgenbildes,
- Ermitteln der Kennung der Transportwanne (9),
- automatisches Zuordnen des Röntgenbildes zu der Transportwanne (9),
- Transport der Transportwanne (9) zu einem Nachkontrollplatz (3),
- Ermitteln der Kennung der Transportwanne (9),
- Anzeigen des der Transportwanne (9) zugeordneten Röntgenbildes.

2. Verfahren nach Anspruch 1, **dadurch gekennzeichnet, dass** es sich bei dem Kennzeichnungsmittel (10, 11, 12) um einen RFID-Sender (10) handelt.

3. Verfahren nach Anspruch 1 oder 2, **dadurch gekennzeichnet, dass** es sich bei dem Kennzeichnungsmittel (10, 11, 12) um einen Barcode (11) handelt.

4. Verfahren nach einem der Ansprüche 1 bis 3, **dadurch gekennzeichnet, dass** es sich bei dem Kennzeichnungsmittel (10, 11, 12) um Bleisymbole (12a) handelt.

## Claims

1. Method for carrying out a security check on hand luggage as an object, having the method steps of:
- placing the object in a transport tray (9) having an identification means (10, 11, 12) which is permanently connected to the tray (9) and has a tray-specific identifier,
- recording an x-ray image of the object,
- evaluating the x-ray image,
- determining the identifier of the transport tray (9),
- automatically assigning the x-ray image to the transport tray (9),
- transporting the transport tray (9) to a secondary control location (3),
- determining the identifier of the transport tray (9),
- displaying the x-ray image assigned to the transport tray (9).

2. Method according to Claim 1, **characterized in that** the identification means (10, 11, 12) is an RFID transmitter (10).

3. Method according to Claim 1 or 2, **characterized in that** the identification means (10, 11, 12) is a barcode (11).

4. Method according to one of Claims 1 to 3, **characterized in that** the identification means (10, 11, 12) is lead symbols (12a).

## Revendications

1. Procédé de contrôle de sécurité pour des objets de type bagages à main, présentant les étapes de procédé suivantes :
- dépose de l'objet dans une cuve de transport (9) qui présente un moyen de caractérisation (10, 11, 12) connecté fixement à la cuve (9), avec une caractérisation spécifique à la cuve,
- enregistrement d'une image radioscopique de l'objet,
- analyse de l'image radioscopique,
- détermination de la caractérisation de la cuve de transport (9),
- affectation automatique de l'image radioscopique à la cuve de transport (9),
- transport de la cuve de transport (9) vers un poste de contrôle ultérieur (3),
- détermination de la caractérisation de la cuve de transport (9),
- affichage de l'image radioscopique affectée à la cuve de transport (9).

2. Procédé selon la revendication 1, **caractérisé en ce que** le moyen de caractérisation (10, 11, 12) est un émetteur RFID (10).

3. Procédé selon la revendication 1 ou 2, **caractérisé en ce que** le moyen de caractérisation (10, 11, 12) est un code à barres (11).

4. Procédé selon l'une quelconque des revendications 1 à 3, **caractérisé en ce que** le moyen de caractérisation (10, 11, 12) est constitué par des symboles Blyss (12a).
